# EUROPÄISCHE PATENTSCHRIFT

(11) **EP 2 031 832 B1**
(45) Veröffentlichungstag und Bekanntmachung des Hinweises auf die Patenterteilung: **05.09.2012**
(21) Anmeldenummer: 08156463.5
(22) Anmeldetag: 19.05.2008
(51) Int. Cl.: H04L 29/08, H04L 12/28

(54) **VERFAHREN ZUR BEREITSTELLUNG UND AKTIVIERUNG EINES PERSÖNLICHEN NETZWERKS**
METHOD FOR ACTIVATING AND MAKING OPERATIONAL A PERSONAL NETWORK
PROCÉDÉ DE PRÉPARATION ET D'ACTIVATION D'UN RÉSEAU PERSONNEL

(30) Priorität: 18.05.2007 EP 07108487
(43) Veröffentlichungstag der Anmeldung: 04.03.2009
(73) Patentinhaber: Vodafone Holding GmbH, 40213 Düsseldorf (DE)
(72) Erfinder: Lu, Yang, 40489 Düsseldorf (DE); Wild, Peter, 47807 Krefeld (DE)
(74) Vertreter: Weisse, Renate

(56) Entgegenhaltungen:
- WO-A-2006/117323
- 3GPP: "3rd Generation Partnership Project;Technical Specification Group Services and System Aspects;Personal network Management (PNM);Procedures and Information Flows;Stage 2 (Release 8)" 3GPP TS 23.259 V0.3.0, 16. Mai 2007 (2007-05-16), XP002510680 3gpp

## Beschreibung

### Technisches Gebiet

Die Erfindung betrifft ein Verfahren zur Bereitstellung und Aktivierung eines persönlichen Netzwerks aus mindestens einem Mobilfunkendgerät mit jeweils einer privaten Nutzeridentität und mindestens einer öffentlichen Nutzeridentität in einer IMS-Domäne eines öffentlichen Mobilfunknetzes *mit folgenden Verfahrensschritten:*
*a) Bereitstellen eines Applikationsservers in der IMS-Domäne zum Aufbau und zur Verwaltung des persönlichen Netzwerks,*
*b) Erfassen der privaten Nutzeridentität eines Mobilfunkendgeräts und speichern dieser Nutzeridentität in einer Datenbank des Applikationsserver des persönlichen Netzwerks,*
*c) Registrieren des Mobilfunkendgeräts zur Nutzung der IMS-Domäne durch Übermitteln einer Registrierungsanforderung mit der privaten Nutzeridentität und einer öffentlichen Nutzeridentität eines Benutzers an eine Registrierungsvorrichtung in dem öffentlichen Mobilfunknetz,*
*d) Aktivieren des persönlichen Netzwerks durch den Applikationsserver für das Mobilfunkendgerät mit den in der Registrierungsanforderung für die IMS-Domäne enthaltenen privaten und öffentlichen Nutzeridentität des Mobilfunk endgeräts.*

### Stand der Technik

Ein Mobilfunknetz der 3. Generation, beispielsweise nach dem UMTS- (Universal Mobil Telecommunication System) Standard, enthält neben einem leitungsorientierten (CS = Circuit Switched) Subsystem für leitungs- bzw. kanalvermittelte Verbindungen und einem paketorientierten (PS = Packet Switched) Subsystem zur Vermittlung von Datenpaketen auch ein Internet Protokoll Multimedia Subsystem (IMS). Diese Subsysteme oder Bereiche werden im UMTS auch Domänen genannt und sind in dem Vermittlungsnetz bzw. Kernnetz (Core Network Domäne) eines Mobilfunknetzes vorgesehen.

Die IMS-Domäne dient dazu, IP-basierte (Internet-Protokoll-basierte) Multimedia-Dienste anzubieten und insbesondere Internetdienste wie beispielsweise Internet-Telefonie, Internet-Radio oder Internet-Fernsehen auch für Mobilfunkteilnehmer zugänglich zu machen. Mit dem IMS wird eine gemeinsame Plattform für Echtzeit- und andere Dienste geschaffen und eine Konvergenz von CS- und PS-Netzwerkelementen eingeführt. Neue Dienste können mit so genannten Applikationsservern in dem IMS schnell und unkompliziert installiert werden. Das IMS ist eine nach 3GPP (Third Generation Partnership Projekt) standardisierte Netzwerkarchitektur für Telekommunikationsnetzwerke und dem Fachmann bspw. aus "3GPP TS 23.228: IP multimedia subsystem; Stage 2" bekannt.

Zur Nutzung von Diensten über das IMS registriert sich ein Mobilfunkteilnehmer bei einem Anbieter und erhält eine private Nutzeridentität (IMPI = IP Multimedia Private User Identifier) und eine oder mehrere öffentliche Nutzeridentitäten (IMPU = IP Multimedia Public User Identifierer). Mit der privaten Nutzeridentität meldet sich ein Teilnehmer bei einer IMS-Domäne zur Nutzung von Diensten über die IMS-Domäne an. Die öffentlichen Nutzeridentitäten dienen als öffentliche Adressen des Teilnehmers in der IMS-Domäne für Dienste oder andere Teilnehmer. Eine öffentliche Nutzeridentität ist bezüglich des Nutzers eindeutig, aber nicht permanent an einen Anschluss oder ein Gerät gebunden, sondern von überall auf der Welt mit einem IMS-fähigen Endgerät nutzbar. Die gleiche öffentliche Nutzeridentität kann somit von mehreren angemeldeten und aktivierten Endgeräten verwendet werden.

Gegenwärtig verfügen immer mehr Mobilfunkteilnehmer über mehrere verschiedene Mobilfunkendgeräte mit unterschiedlichen Funktionalitäten zur mobilen Kommunikation. Auch besitzen Geräte im Heimbereich eines Mobilfunkteilnehmers, beispielsweise Haushaltsgeräte und Überwachungsanlagen, zunehmend eine Schnittstelle zur Anbindung an ein Netzwerk im persönlichen Bereich (PAN = Personal Area Network) oder an ein Mobilfunkendgerät. Um den Einsatz und die Verwaltung der verschiedenen Mobilfunkendgeräte und netzwerkfähigen Geräte eines Teilnehmers zu erleichtern, werden so genannte persönliche oder private Netze (PN) mit einer Managementeinrichtung (PNM: Personal Network Management) in einem Mobilfunknetz eingesetzt.

Mit Hilfe der PNM wird eine Vernetzung aller Mobilfunkendgeräte und netzwerkfähigen Geräte eines Teilnehmers eingerichtet und verwaltet. Eine Konfiguration des PNM ist direkt durch den Teilnehmer oder mit Unterstützung eines Mobilfunknetzbetreibers möglich. Ein PN ermöglicht beispielsweise eine Weiterleitung eingehender Nachrichten je nach Datenformat an das am besten zur Darstellung geeignete Mobilfunkendgerät. Dem Fachmann ist die Funktionsweise von persönlichen Netzwerken z.B. aus der Spezifikation 3GPP TS 22.259 V8.3.0 (2006-06) geläufig.

Ein Nachteil der bekannten Verfahren und Einrichtungen zum Bereitstellen und Aktivieren von persönlichen Netzwerken ist, dass dies mit einem erheblichen Aufwand für den Benutzer verbunden ist. Private Nutzeridentitäten, Adressen im persönlichen Netzwerk und öffentliche Nutzeridentitäten müssen manuell eingepflegt und an die PNM übermittelt werden, bevor das persönliche Netzwerk aktiviert werden kann. Auch die eigentliche Aktivierung des persönlichen Netzwerks muss zeitaufwendig und mühsam durch den Benutzer mit dem Übermitteln entsprechender Befehle durchgeführt werden.

*In dem Dokument* 3GPP TS 23.259 V0.3.0, "3rd Generation Partnership Project; Technical Spezification Group Services and System Aspects; Personal Network Management (PNM); Procedures and Information Flows; Stage 2 (Release 8) ", 16. Mai 2007*, XP002510680 werden Prozeduren für ein Management eines persönlichen Netzwerks über eine IMS-Domäne eines Mobilfunknetzes beschrieben. Das Management des persönlichen Netzwerks erfolgt durch einen Applikationsserver in der IMS-Domäne. Zur Registrierung sendet ein Mobilfunkendgerät eine private und eine öffentliche Nutzeridentität in einer Registrierungsanforderung an eine Ruf- und Sitzungssteuereinheit der IMS-Domäne. Die Ruf- und Sitzungssteuereinheit befragt einen Teilnehmerheimatserver nach weitere Daten zur Registrierung und übermittelt anschlieβend die öffentliche Nutzeridentität und Daten bezüglich der Einsatzmöglichkeiten des Mobilfunkendgeräts an den Applikationsserver. Der Applikationsserver prüft die öffentliche Nutzeridentität und aktiviert diese dann für das Mobilfunkendgerät im persönlichen Netzwerk.*

*Die internationale Anmeldung* WO 2006/117 323 Al *zeigt ebenfalls ein persönliches Netzwerk von Endgeräten über eine IMS-Domäne eines Mobilfunknetzes mit einem Applikationsserver als Managementeinheit auf. Nach der* WO 2006/117 323 A1 *verfügt nur ein Teilnehmerheimatserver über Informationen zur Zuordnung von mehreren öffentlichen Nutzeridentitäten zu einem einzelnen Dienstprofil. Daher sind Mittel bei dem Teilnehmerheimatserver zur Verwaltung der Zuordnung öffentlichen Nutzerprofilen an Dienstprofile vorgesehen. Ferner sind Mittel für den Applikationsserver, Ruf- und Sitzungssteuereinheiten und Endgeräte vorgesehen, um bei einer Registrierung und Aktivierung eines Mobilfunkendgeräts in dem persönlichen Netzwerk eine Zuordnung von öffentlichen Nutzerprofilen zu Dienstprofilen von dem Teilnehmerheimatserver zu empfangen. Auf diese Weise erhaltenen der Applikationsserver, die Ruf- und Sitzungssteuereinheiten und ein entsprechendes Mobilfunkendgerät umgehend alle für eine Aktivierung des Mobilfunkendgeräts im persönlichen Netzwerk notwendigen Informationen. Insbesondere wird die Zuordnung von mehreren öffentlichen Nutzeridentitäten zu einem Dienstprofil von dem Teilnehmerheimatserver an diese Netzwerkelemente übermittelt.*

### Offenbarung der Erfindung

Aufgabe der Erfindung ist es daher, Nachteile des Standes der Technik zu vermeiden und insbesondere eine Aktivierung eines persönlichen Netzwerks in einem öffentlichen Mobilfunknetz für einen Benutzer zu vereinfachen.

Erfindungsgemäß wird die Aufgabe bei einem Verfahren der eingangs genannten Art zur Bereitstellung und Aktivierung eines persönlichen Netzwerks aus mindestens einem Mobilfunkendgerät mit jeweils einer privaten Nutzeridentität und mindestens einer öffentlichen Nutzeridentität in einer IMS-Domäne eines öffentlichen Mobilfunknetzes *dadurch* gelöst, *dass*
*e) die privaten und öffentlichen Nutzeridentitäten eines Mobilfunkendgeräts bzw. eines Benutzers bei der Registrierung des Benutzers durch Speichern von benutzerspezifischen Daten in einem Teilnehmerheimatserver von der Datenbank für den Applikationsserver des persönlichen Netzwerks erfasst werden und dabei eine Zuordnung von öffentlichen Nutzeridentitäten an bestimmte private Nutzeridentitäten erfolgt.*

Die Erfindung beruht auf dem Prinzip, Mittel und Voreinstellungen für ein persönliches Netzwerk in einer IMS-Domäne eines Mobilfunknetzes für einen Benutzer bereitzustellen und eine Aktivierung des persönlichen Netzwerks implizit und ohne weiteres Zutun des Benutzers bei einer Registrierung des Mobilfünkendgeräts in der IMS-Domäne vorzunehmen. Dazu wird das persönliche Netzwerk durch einen Applikationsserver in der IMS-Domäne initiiert und verwaltet. Das Management des persönlichen Netzwerks, auch als PNM (Personal Network Management) bezeichnet, wird somit durch den Applikationsserver realisiert. Der Applikationsserver hat Zugriff auf eine Datenbank, in der zumindest die zuvor, beispielsweise durch einen Netzwerkoperator erfassten privaten Nutzeridentitäten der jeweiligen Mobilfunkendgeräte eines Benutzers gespeichert sind. Bei einer Registrierung eines Mobilfunkendgeräts zur Nutzung der IMS-Domäne des Mobilfunknetzes werden mit der Registrierungsanforderung die private Nutzeridentität und eine öffentliche Nutzeridentität übermittel und mit diesen Daten das persönliche Netzwerk durch den Applikationsserver aktiviert. Beispielsweise kann dabei die öffentliche Nutzeridentität der privaten Nutzeridentität des Mobilfunkendgeräts zugeordnet werden und somit alle an die öffentliche Nutzeridentität gerichteten Sitzungsanfragen (z.B. ein Internet-Telefonie-Anruf oder ein herkömmlicher, in die IMS-Domäne weitergeleiteter Telefonanruf) an das Mobilfunkendgerät weitergeleitet werden.

Durch das erfindungsgemäße Verfahren wird eine automatische Aktivierung eines persönlichen Netzwerks für Mobilfunkendgeräte eines Benutzers mit einer voreingestellten Konfiguration ermöglicht. Der Benutzer muss sich nicht mehr mühsam und zeitaufwendig selber um eine Aktivierung mit einer entsprechend komplizierten Konfiguration kümmern. Es wird dem Benutzer vielmehr unmittelbar und ohne eigenes Zutun ein aktiviertes persönliches Netzwerk zur Verfügung gestellt, mit dem zum Beispiel eine Rufweiterleitung an entsprechende Mobilfunkendgeräte des Benutzers ermöglicht wird. Dadurch wird die Nutzung von persönlichen Netzwerken in einem Mobilfunknetz durch das erfindungsgemäße Verfahren wesentlich vereinfacht und somit eine Akzeptanz von persönlichen Netzwerken erheblich gesteigert.

Eine vorteilhafte Ausbildung des erfindungsgemäßen Verfahrens zur Bereitstellung und Aktivierung eines persönlichen Netzwerks wird dadurch erreicht, dass zusätzlich die öffentlichen Nutzeridentitäten eines Benutzers erfasst und in der Datenbank für den Applikationsserver des persönlichen Netzwerks gespeichert werden. Dadurch werden auch die öffentlichen Nutzeridentitäten von der Datenbank für eine Aktivierung bereitgestellt und können schon für eine Voreinstellung des noch nicht aktivierten persönlichen Netzwerks durch den Applikationsserver verwendet bzw. berücksichtigt werden. Eine Aktivierung des persönlichen Netzwerks erfolgt schneller und durch Berücksichtigung aller öffentlichen Nutzeridentitäten mit einer optimalen Konfiguration. Weiterhin wird eine spätere Wartung oder eine Änderung der Konfiguration durch das Vorliegen der öffentlichen Nutzeridentitäten in der Datenbank für einen Benutzer bedeutend vereinfacht.

*Bei dem* erfindungsgemäßen Verfahren zur Bereitstellung und Aktivierung eines persönlichen Netzwerks werden die privaten und/oder öffentlichen Nutzeridentitäten eines Mobilfunkendgeräts bzw. eines Benutzers bei der Registrierung des Benutzers durch Speichern von benutzerspezifischen Daten in einem Teilnehmerheimatserver (engl. HSS: Home Subcriber Server) von der Datenbank für den Applikationsserver des persönlichen Netzwerks erfasst. Üblicherweise erfolgt eine Registrierung von benutzerspezifischen Daten in einem Teilnehmerheimatserver des Mobilfunknetzes bei der Aushändigung einer SIM- (Subscriber Identification Module) Karte an einen Benutzer durch einen Mobilfunkanbieter. Mit der Nutzung der Registrierung eines Benutzers werden die Nutzeridentitäten sehr effizient und ressourcenschonend von der Datenbank erfasst. Zudem wird durch diese Maßnahme gewährleistet, dass die Nutzeridentitäten unmittelbar nach Ausgabe der SIM-Karte und somit bei einer ersten Nutzung der SIM-Karte in einem Mobilfunkendgerät in der Datenbank zur Verfügung stehen.

Gemäß einer vorteilhaften Ausgestaltung des erfindungsgemäßen Verfahrens zur Bereitstellung und Aktivierung eines persönlichen Netzwerks enthält der Schritt der Registrierung zur Nutzung der IMS-Domäne ferner folgende Schritte:
a) Übermitteln einer Registrierungsanforderung mit einer privaten und einer öffentlichen Nutzeridentität zur Nutzung der IMS-Domäne durch ein Mobilfunkendgerät an einen Registrator in einer Ruf- und Sitzungssteuereinheit der IMS-Domäne,
b) Anfordern von Benutzerinformationen von einem Teilnehmerheimatserver durch die Ruf- und Sitzungssteuereinheit der IMS-Domäne, enthaltend eine Adresse und/oder Name des Applikationsservers für das persönliche Netzwerk.
c) Registrieren des Mobilfunkendgeräts in der IMS-Domäne und Weiterleiten der privaten und der öffentlichen Nutzeridentität in einer Registrierungsanforderung an den Applikationsserver des privaten Netzwerks durch die Ruf- und Sitzungssteuereinheit.

Als Ruf- und Sitzungssteuereinheit kann beispielsweise eine, dem Fachmann bekannte S-CSCF (Serving - Call Session Control Function) in der IMS-Domäne verwendet werden. Mit diesen Verfahrensschritten ist eine Weiterleitung der öffentlichen und privaten Nutzeridentität bei einer Registrierung des Mobilfunkendgeräts in einer IMS-Domäne an den Applikationsserver für das persönliche Netzwerk einfach und effektiv realisierbar.

Ferner wird eine bevorzugte Weiterbildung des erfindungsgemäßen Verfahrens zur Bereitstellung und Aktivierung eines persönlichen Netzwerks dadurch erzielt, dass der Schritt der Aktivierung des persönlichen Netzwerks eine Berechtigungsüberprüfung des Mobilfunkendgeräts und/oder des Benutzers zur Aktivierung umfasst. Durch die Berechtigungsüberprüfung des Mobilfunkendgeräts und/oder des Benutzers wird eine willentliche oder unwillentliche Aktivierung des persönlichen Netzwerks und somit ein Missbrauch oder eine Störung durch unbefugte Benutzer bzw. deren Mobilfunkendgeräte verhindert. Somit wird die Sicherheit bei einer Verwendung von persönlichen Netzwerken wirkungsvoll verbessert.

Die Berechtigungsüberprüfung enthält in einer Ausbildung des erfindungsgemäßen Verfahrens vorzugsweise folgende Verfahrensschritte:
a) Übermitteln der empfangenen privaten Nutzeridentität des Mobilfunkendgeräts von dem Applikationsserver des persönlichen Netzwerks an den Teilnehmerheimatserver,
b) Übermitteln mindestens einer mit der privaten Nutzeridentität korrespondierenden öffentlichen Nutzeridentität als Antwort von dem Teilnehmerheimatserver an den Applikationsserver des persönlichen Netzwerks,
c) Vergleichen der zur Aktivierung erhaltenen öffentlichen Nutzeridentität mit der von dem Teilnehmerheimatserver erhaltenen öffentlichen Nutzeridentität.
d) Aktivieren des persönlichen Netzwerks für die private und öffentliche Nutzeridentität eines Mobilfunkendgeräts bei Übereinstimmung der öffentlichen Nutzeridentitäten.

Durch den Vergleich der von dem Applikationsserver empfangenen öffentlichen Nutzeridentität mit der in dem Teilnehmerheimatserver gespeicherten öffentlichen Nutzeridentität der privaten Nutzeridentität wird eine wirksame Überprüfung der Berechtigung zur Aktivierung erzielt. Ferner ist eine solche Überprüfung in dem Mobilfunknetz ohne großen Aufwand implementierbar und unkompliziert durchführbar.

Weitere Ausgestaltungen und Vorteile ergeben sich aus dem Gegenstand der Unteransprüche, sowie der Zeichnung mit der dazugehörigen Beschreibung. Ein Ausführungsbeispiel der Erfindung ist nachstehend unter Bezugnahme auf die zugehörige Zeichnung näher erläutert.

### Kurze Beschreibung der Zeichnung

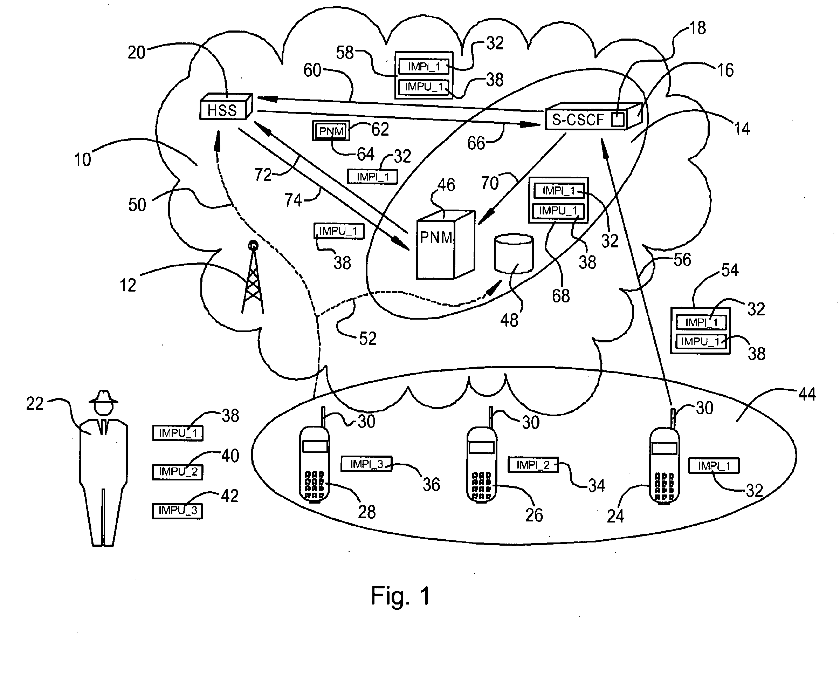

- Fig. 1: zeigt in einer schematischen Prinzipskizze ein Ausführungsbeispiel des erfindungsgemäßen Verfahrens zur Bereitstellung und Aktivierung eines persönlichen Netzwerks.

### Bevorzugtes Ausführungsbeispiel

In Fig. 1 wird mit 10 ein Mobilfunknetz bezeichnet. Das Mobilfunknetz 10 ist ein Mobilfunknetz der 2,5., 3. oder 4. Generation, beispielsweise nach dem GSM/GPRS-, UMTS-, CDMA2000-, FOMA-, TD-SCDMA- oder WiMAX-Standard. Dem Fachmann sind solche Mobilfunknetze mit den entsprechenden Bestandteilen geläufig. Der Einfachheit halber wird das Mobilfunknetz 10 daher nur durch eine Wolke mit einem darin enthaltenen Funkmast 12 stilisiert dargestellt. Das Mobilfunknetz 10 enthält ein IP-Multimedia-Subsystem (IMS) Domäne 14 zum Integrieren und Anbieten von IPbasierten Multimedia-Diensten und anderen Diensten für Benutzer.

Zur Benutzerregistrierung und Verwaltung von Ruf- bzw. Sitzungszuständen in der IMS-Domäne 14 ist eine Ruf- und Sitzungssteuereinheit 16 vorgesehen, welche im Folgende auch als S-CSCF 16 (Serving - Call Session Control Function) bezeichnet wird. Die S-CSCF 16 verfügt über eine Registrierungseinheit 18 zur Registrierung von Mobilfunkendgeräten in der IMS-Domäne 14. Weiterhin enthält das Mobilfunknetz 10 einen Teilnehmerheimatserver 20 (engl. HSS: Home Subscriber Server). Der Teilnehmerheimatserver 20 führt die Benutzerprofile und ist zuständig für eine Benutzeridentifikation und Zugangsautorisierung zu Diensten des Mobilfunknetzes 10. Die S-CSCF 16 und der HSS 20 sind dem Fachmann wohlbekannte Einrichtungen für ein Mobilfunknetz der oben beschriebenen Art.

Ein Benutzer 22 verfügt beispielhaft über drei Mobilfunkendgeräte 24, 26, 28. Die Mobilfunkendgeräte 24, 26, 28 können jeweils beispielsweise ein Mobiltelefon, Handy, Autotelefon, Smartphone, ein stationärer Rechner (z.B. PC) oder mobiler Rechner (z.B. Notebook, PDA) oder ein anderes Gerät mit einer eingebauten oder über eine Schnittstelle angeschlossenen Mobilfunkschnittstelle 30 (z.B. eine PMCCIA-Karte) sein. Mit den Mobilfunkendgeräten 24, 26, 28 ist eine Kommunikation über das Mobilfunknetz 10 mit der jeweiligen Mobilfunkschnittstelle 30 möglich. Dazu verfügen die Mobilfunkendgeräte 24, 26, 28 ferner über eine in Fig. 1 nicht dargestellt SIM-(Subscriber Identification Module) Karte zur Identifikation und Autorisation im Mobilfunknetz 10.

Insbesondere ist mit den Mobilfunkendgeräten 24, 26, 28 eine Nutzung der IMS-Domäne 14 möglich. Jedes Mobilfunkendgerät 24, 26, 28 besitzt eine entsprechende private Nutzeridentität 32, 34, 36, welche im Folgenden auch mit IMPI_1, IMPI_2 und IMPI_3 (IMPI: IP Multimedia Private User Identifier) bezeichnet werden. Mit der entsprechenden privaten Nutzeridentität 32, 34, 36 registrieren sich die Mobilfunkendgeräte 24, 26, 28 über das Mobilfunknetz 10 in der IMS-Domäne 14, um Dienste über diese zu nutzen. Um über die IMS-Domäne für andere Benutzer oder für Dienste erreichbar zu sein, verfügt der Benutzer 22 ferner über mehrere öffentliche Nutzeridentitäten 38, 40, 42, welche im Folgenden auch als IMPU_1, IMPU_2 und IMPU_3 (IMPU: IP Multimedia Public Identifier - User ID) bezeichnet werden. Die öffentlichen Nutzeridentitäten 38, 40, 42 werden den Mobilfunkendgeräten 24, 26, 28 je nach Bedarf zugeordnet. Dabei kann eine öffentliche Nutzeridentität 38, 40, 42 auch von mehreren Mobilfunkendgeräte 24, 26, 28 verwendet werden.

Die Mobilfunkendgeräte 24, 26, 28 können unterschiedliche Funktionalitäten aufweisen und jeweils in einem anderen Bereich, wie beispielsweise am Arbeitsplatz, zu Hause oder unterwegs verwendet werden. Um dem Benutzer 22 eine Nutzung, Verwaltung und Koordination der Mobilfunkendgeräte 24, 26, 28 zu erleichtern, ist über die IMS-Domäne 14 ein persönliches Netzwerk 44 zwischen den Mobilfunkendgeräten 24, 26, 28 eingerichtet. Dazu verfügt die IMS-Domäne 14 über einen Applikationsserver 46 zum Aufbau und zur Verwaltung des persönlichen Netzwerks 44. Der Applikationsserver 46 wird daher auch als PNM-AS 46 (Personal Network Management - Application Server) bezeichnet. Der PNM-AS 46 verwaltet insbesondere den Datenaustausch zwischen den Mobilfunkendgeräten 24, 26, 28 und leitet an eine öffentliche Nutzeridentität 38, 40, 42 adressierte Ruf- bzw. Sitzungsanforderung an ein entsprechendes Mobilfunkendgerät 24, 26, 28 weiter. Die eigentliche Datenübermittlung erfolgt dabei über herkömmliche Datenkanäle im Mobilfunknetz 10. Weiterhin verfügt der PNM-AS 46 über eine Datenbank 48, in der zu mindest Konfigurationen des persönlichen Netzwerks 44, private Nutzeridentitäten 32, 34, 36 und öffentliche Nutzeridentitäten 38, 40, 42 für einen späteren Zugriff gespeichert werden.

Alternativ oder zusätzlich können in das persönliche Netzwerk 44 auch Geräte ohne SIM-Karte oder ohne Mobilfunkschnittstelle 30 integriert werden. Auch eine Einbindung von lokalen Netzwerken ist möglich. In solchen Fällen werden eine SIM-Karte bzw. eine Mobilfunkschnittstelle 30 eines der Mobilfunkendgeräte 32, 34, 36 für die Geräte mitbenutzt. Dazu werden die Geräte beispielsweise durch entsprechende Schnittstellen mit den Mobilfunkendgeräten 32, 34, 36 verbunden und interne Adressen als private Nutzeridentitäten verwendet.

Um eine Aktivierung des persönlichen Netzwerks 44 zu vereinfachen, wird der PNM-AS 46 bereits bei einer Aushändigung der SIM-Karten für die Mobilfunkendgeräte 32, 34, 36 in der IMS-Domäne 14 bereitgestellt. Zusätzlich werden die privaten Nutzeridentitäten 32, 34, 36 und die öffentlichen Nutzeridentitäten 38, 40, 42 des Benutzers bei dem Registrieren in dem Teilnehmerheimatserver 20 während der Ausgabe der SIM-Karten erfasst und in der Datenbank 48 des PNM-AS 46 gespeichert. Dieser Vorgang wird in Fig. 1 durch die gestrichelten Pfeile 50 und 52 dargestellt. Ferner können weitere Daten und Voreinstellungen in der Datenbank für den Benutzer 22 gespeichert werden. So ist beispielsweise eine Zuordnung von öffentlichen Nutzeridentitäten 38, 40, 42 an bestimmte private Nutzeridentitäten 32, 34, 36 und somit an entsprechende Mobilfunkendgeräte 24, 26, 28 als Voreinstellung möglich. Eine solche Zuordnung wird aber erst bei einer Aktivierung gültig. Ein Beispiel einer Speicherung und Zuordnung von privaten Nutzeridentitäten 32, 34, 36 und öffentlichen Nutzeridentitäten 38, 40, 42 für das persönliche Netzwerk 44 des Benutzers 22 wird in Tabelle 1 gezeigt. Deutlich zu erkennen ist in Tabelle 1. beispielsweise die nicht aktivierte Zuordnung der öffentlichen Nutzeridentität 38 (IMPU_1) zu der privaten Nutzeridentität 32 (IMPI_1).

**Tabelle 1: Beispiel eines Eintrags in der Datenbank 48 für das persönliche Netzwerk 44**

| Netzwerk ID | Mobilfunkendgerät | Private Nutzeridentität | Öffentliche Nutzeridentität | Status der Aktivierung |
|---|---|---|---|---|
| Persönliches Netzwerk 44 | 24 | IMPI_1 | IMPU_1 | Nein |
| | 26 | IMPI_2 | IMPU_1 | Nein |
| | | | IMPU_2 | |
| | 28 | IMPI_3 | IMPU_1 | Nein |
| | | | IMPU_2 | |
| | | | IMPU_3 | |

Wenn sich nun zum Beispiel das Mobilfunkendgerät 24 durch den Benutzer 22 zur Nutzung der IMS-Domäne 14 registrieren soll, wird von dem Mobilfunkendgerät 24 eine Registrierungsanforderung 54 mit der privaten Nutzeridentität 32 und der öffentlichen Nutzeridentität 38 an die Registrierungseinheit 18 der S-CSCF 16 übermittelt, Pfeil 56. Dies kann automatisch beim Einschalten des Mobilfunkendgeräts 24 oder bei einer Auswahl eines Dienstes der IMS-Domäne 14 durch den Benutzer 22 erfolgen. Auch eine manuell durch den Benutzer 22 ausgelöste Registrierung des Mobilfunkendgeräts 24 in der IMS-Domäne 14 ist möglich. Sowohl die Auswahl der öffentlichen Nutzeridentität 38 als auch die Aktivierung des persönlichen Netzwerks 44 kann dabei voreingestellt oder durch eine Befragung des Benutzers 22 interaktiv zu Beginn der Registrierung in der IMS-Domäne 14 festgelegt werden.

Auf den Erhalt der Registrierungsanforderung 54 übermittelt (Pfeil 60) die S-CSCF 16 eine Informationsanforderung 58 mit der Nutzeridentität 32 und der öffentlichen Nutzeridentität 38 an den Teilnehmerheimatserver 20. Der Teilnehmerheimatserver 20 übermittelt als Antwort 62 neben anderen Daten auch eine Adresse 64 des PNM-AS 46 für das persönliche Netzwerk 44, Pfeil 66. Die S-CSCF 16 registriert daraufhin das Mobilfunkendgerät 24 zur Nutzung der IMS-Domäne 14 und leitet die private Nutzeridentität 32 und die öffentlichen Nutzeridentität 38 in einer Registrierungsanforderung 68 an den PNM-AS 46 weiter, Pfeil 70. Der PNM-AS 46 ruft dann die entsprechenden Daten aus der Datenbank 48 ab und aktiviert das persönliche Netzwerk 44. Dabei wird in diesem Beispiel der Aktivierungsstatus für das Mobilfunkendgerät 24 nach Tabelle 1 auf Ja gesetzt und somit die öffentliche Nutzeridentität 38 der privaten Nutzeridentität 32 bzw. dem Mobilfunkendgerät 24 zugeordnet. Entsprechend wird bei den anderen Mobilfunkendgeräten 26, 28 verfahren.

Optional ist vor der Aktivierung des persönlichen Netzwerks 44 eine Berechtigungsüberprüfung des Mobilfunkendgeräts 24 bzw. des Benutzers 22 zur Aktivierung des persönlichen Netzwerks 44 möglich. Dazu übermittelt (Pfeil 72) der PNM-AS 46 die empfangene private Nutzeridentität 32 an den Teilnehmerheimatserver 20. Der Teilnehmerheimatserver 20 übermittelt als Antwort eine korrespondierende öffentliche Nutzeridentität 38 an den PNM-AS 46, Pfeil 74. Der PNM-AS 46 vergleicht die von der S-CSCF 16 empfangenen öffentliche Nutzeridentität 38 mit der von dem Teilnehmerheimatserver 20 zurückgeschickten öffentlichen Nutzeridentität 38 und aktiviert bei Übereinstimmung das persönliche Netzwerk 44, wie oben beschrieben.

Durch das beschriebene Verfahren wird eine sehr benutzerfreundliche, automatische und sichere Aktivierung eines persönlichen Netzwerks 44 bei einer Registrierung eines Mobilfunkendgeräts 24, 26, 28 in der IMS-Domäne 14 erzielt. Der Benutzer 22 muss keine umständlichen und komplizierten Einstellungen vornehmen, um sein persönliches Netzwerk 44 für eine Nutzung zu aktivieren.

## Patentansprüche

1. Verfahren zur Bereitstellung und Aktivierung eines persönlichen Netzwerks (44) aus mindestens einem Mobilfunkendgerät (24, 26, 28) mit jeweils einer privaten Nutzeridentität (32, 34, 36) und mindestens einer öffentlichen Nutzeridentität (38, 40, 42) in einer IMS-Domäne (14) eines öffentlichen Mobilfunknetzes (10) mit folgenden Verfahrensschritten:
a) Bereitstellen eines Applikationsservers (46) in der IMS-Domäne (14) zum Aufbau und zur Verwaltung des persönlichen Netzwerks (44),
b) Erfassen (52) der privaten Nutzeridentität (32, 34, 36) eines Mobilfunkendgeräts (24, 26, 28) und speichern dieser Nutzeridentität (32, 34, 36) in einer Datenbank (48) des Applikationsserver (46) des persönlichen Netzwerks (44),
c) Registrieren des Mobilfunkendgeräts (24, 26, 28) zur Nutzung der IMS-Domäne (14) durch Übermitteln (56) einer Registrierungsanforderung (54) mit der privaten Nutzeridentität (32, 34, 36) und einer öffentlichen Nutzeridentität (38, 40, 42) eines Benutzers (22) an eine Registrierungsvorrichtung (18) in dem öffentlichen Mobilfunknetz (10),
d) Aktivieren des persönlichen Netzwerks (44) durch den Applikationsserver (46) für das Mobilfunkendgerät (24, 26, 28) mit den in der Registrierungsanforderung (54) für die IMS-Domäne (14) enthaltenen privaten und öffentlichen Nutzeridentität (32, 34, 36, 38, 40, 42) des Mobilfunkendgeräts (24, 26, 28),
***dadurch gekennzeichnet, dass***
*e) die privaten und öffentlichen Nutzeridentitäten (32, 34, 36, 38, 40, 42) eines Mobilfunkendgeräts (24, 26, 28) bzw. eines Benutzers (22) bei der Registrierung (50) des Benutzers (22) durch Speichern von benutzerspezifischen Daten in einem Teilnehmerheimatserver (20) von der Datenbank (48) für den Applikationsserver (46) des persönlichen Netzwerks (44) erfasst (52) werden und dabei eine Zuordnung von öffentlichen Nutzeridentitäten (38, 40, 42) an bestimmte private Nutzeridentitäten (32, 34, 36) erfolgt.*

2. 4- Verfahren zur Bereitstellung und Aktivierung eines persönlichen Netzwerks (44) nach *Anspruch* 1, **dadurch gekennzeichnet, dass** der Schritt der Registrierung zur Nutzung der IMS-Domäne (14) ferner folgende Schritte enthält:
a) Übermitteln (56) einer Registrierungsanforderung (54) mit einer privaten und einer öffentlichen Nutzeridentität (32, 38) zur Nutzung der IMS-Domäne (14) durch ein Mobilfunkendgerät (24) an einen Registrator (18) in einer Ruf- und Sitzungssteuereinheit (16) der IMS-Domäne (14),
b) Anfordern (60) von Benutzerinformationen (62) von einem Teilnehmerheimatserver (20) durch die Ruf- und Sitzungssteuereinheit (16) der IMS-Domäne (14), enthaltend eine Adresse (64) und/oder Name des Applikationsservers (46) für das persönliche Netzwerk (44).
c) Registrieren des Mobilfunkendgeräts (24) in der IMS-Domäne (14) und Weiterleiten (70) der privaten und der öffentlichen Nutzeridentität (32, 38) in einer Registrierungsanforderung (68) an den Applikationsserver (46) des privaten Netzwerks (44) durch die Ruf- und Sitzungssteuereinheit (16).

3. Verfahren zur Bereitstellung und Aktivierung eines persönlichen Netzwerks (44) nach einem der Ansprüche 1 bis 2-4, **dadurch gekennzeichnet, dass** der Schritt der Aktivierung des persönlichen Netzwerks (44) eine Berechtigungsüberprüfung des Mobilfunkendgeräts (24) und/oder des Benutzers (22) zur Aktivierung umfasst.

4. Verfahren zur Bereitstellung und Aktivierung eines persönlichen Netzwerks (44) nach Anspruch 3, **dadurch gekennzeichnet, dass** die Berechtigungsüberprüfung folgende Verfahrensschritte enthält:
a) Übermitteln (72) der empfangenen privaten Nutzeridentität (32) des Mobilfunkendgeräts (24) von dem Applikationsserver (46) des persönlichen Netzwerks (44) an den Teilnehmerheimatserver (20),
b) Übermitteln (74) mindestens einer mit der privaten Nutzeridentität (32) korrespondierenden öffentlichen Nutzeridentität (38) als Antwort von dem Teilnehmerheimatserver (20) an den Applikationsserver (46) des persönlichen Netzwerks (44),
c) Vergleichen der zur Aktivierung erhaltenen öffentlichen Nutzeridentität (38) mit der von dem Teilnehmerheimatserver (20) erhaltenen öffentlichen Nutzeridentität (38).
d) Aktivieren des persönlichen Netzwerks (44) für die private und öffentliche Nutzeridentität (32, 38) eines Mobilfunkendgeräts (24) bei Übereinstimmung der öffentlichen Nutzeridentitäten (38).

## Claims

1. A method for provisioning and activation of a personal network (44) of at least one mobile station (24, 26, 28) having a private user identifier (32, 34, 36) and at least one public user identifier (38, 40, 42) in an IMS domain (14) of a public mobile network (10) comprising the following steps:
a) providing an application server (46) in the IMS domain (14) for establishing and managing the personal network (44),
b) recording (52) the private user identifier (32, 34, 36) of a mobile station (24, 26, 28) and storing this user identifier (32, 34, 36) in a database (48) of the application server (46) of the personal network (44),
c) registering the mobile station (24, 26, 28) for use of the IMS domain (14) by transmitting (56) a registration request (54) with the private user identifier (32, 34, 36) and a public user identifier (38, 40, 42) of a user (22) to a registration device (18) in the public mobile network (10),
d) activating the personal network (44) by the application server (46) for the mobile station (24, 26, 28) with the private and public user identifier (32, 34, 36, 38, 40, 42) of the mobile station (24, 26, 28) contained in the registration request (54) for the IMS domain (14),
**characterized in that**
e) the private and public user identifiers (32, 34, 36, 38, 40, 42) of a mobile station (24, 26, 28) or a user (22) are recorded (52) in the database (48) of the application server (46) of the personal network (44) when registering (50) the user (22) by storing user specific data in a home subscriber server (20) and that thereby an assignment of public user identifiers (38, 40, 42) to certain private user identifiers (32, 34, 36) is carried out.

2. A method for provisioning and activation of a personal network (44) according to claim 1, **characterized in that** said step of registering to use the IMS domain (14) further comprises the steps of:
a) transmitting (56) a registration request (54) with a private and a public user identifier (32, 38) for use of the IMS domain (14) by a mobile station (24) to a registrar (18) in a call and session control unit (16) of the IMS domain (14),
b) requesting (60) of user information (62) from a home subscriber server (20) by the call and session control unit (16) of the IMS domain (14) containing an address (64) and / or name of the application server (46) for the personal network (44),
c) registering the mobile station (24) in the IMS domain (14) and forwarding (70) the private and the public user identifier (32, 38) within a registration request (68) to the application server (46) of the private network (44) by the call and session control unit (16).

3. A method for provisioning and activation of a personal network (44) according to one of claims 1 to 2, **characterized in that** the step of activating the personal network (44) comprises an authorization check of the mobile station (24) and / or the user (22) for activation.

4. A method for provisioning and activation of a personal network (44) according to claim 3, **characterized in that** said authorization check comprises the following steps:
a) transmitting (72) the received private user identifier (32) of the mobile station (24) from the application server (46) of the personal network (44) to the home subscriber server (20),
b) transmitting (74) at least one public user identifier (38) corresponding with the private user identifier (32) as a reply from the home subscriber server (20) to the application server (46) of the personal network (44),
c) comparing the public user identifier (38) obtained for activation with the public user identifier (38) obtained from the home subscriber server (20),
d) activating the personal network (44) for the private and public user identifier (32, 38) of a mobile terminal (24) if the public user identifiers (38) match.

## Revendications

1. Procédé pour la mise à disposition et l'activation d'un réseau personnel (44) composé d'au moins un terminal de radiotéléphonie mobile (24, 26, 28) avec à chaque fois une identité d'utilisateur privé (32, 34, 36) et au moins une identité d'utilisateur public (38, 40, 42) contenue dans un domaine IMS (IP multimédia) (14) d'un réseau public de radiotéléphonie mobile (10), comportant les étapes de procédé suivantes :
(a) mise à disposition d'un serveur d'applications (46) dans le domaine IMS (14) pour la création et la gestion du réseau personnel (44),
(b) saisie (52) de l'identité d'utilisateur privé (32, 34, 36) d'un terminal de radiotéléphonie mobile (24, 26, 28) et sauvegarde de cette identité d'utilisateur (32, 34, 36) dans une banque de données (48) du serveur d'applications (46) du réseau personnel (44),
(c) enregistrement du terminal de radiotéléphonie mobile (24, 26, 28) en vue de l'utilisation du domaine IMS (14) par transmission (56), à un dispositif d'enregistrement (18) situé dans le réseau de radiotéléphonie mobile public (10), d'une demande d'enregistrement (54) avec l'identité d'utilisateur privé (32, 34, 36) et une identité d'utilisateur public (38, 40, 42) d'un utilisateur (22),
(d) activation du réseau personnel (44) par le serveur d' applications (46) pour le terminal de radiotéléphonie mobile (24, 26, 28) avec les identités d'utilisateur privé et public (32, 34, 36, 38, 40, 42) du terminal de radiotéléphonie mobile (24, 26, 28) contenues dans la demande d'enregistrement (54) pour le domaine IMS (14),
**caractérisé en ce que**
(e) les identités d'utilisateur privé et public (32, 34, 36, 38, 40, 42) d'un terminal de radiotéléphonie mobile (24, 26, 28) ou bien d'un utilisateur (22) sont saisies (52) lors de l'enregistrement (50) de l'utilisateur (22) par sauvegarde des données spécifiques à l'utilisateur dans un serveur local d'abonnés (20) par la banque de données (48) pour le serveur d'applications (46) du réseau personnel (44) en affectant des identités d'utilisateur public (38, 40, 42) à des identités d'utilisateur privé définies (32, 34, 36).

2. Procédé pour la mise à disposition et l'activation d'un réseau personnel (44) selon la revendication 1, **caractérisé en ce que** l'étape d'enregistrement en vue de l'utilisation du domaine IMS (14) comprend en outre les étapes suivantes :
(a) transmission (56), à un enregistreur (18) contenu dans une unité de commande d'appels et de sessions (16) du domaine IMS (14), d'une demande d'enregistrement (54) avec une identité d'utilisateur privé et public (32, 38) en vue de l'utilisation du domaine IMS (14) par un terminal de radiotéléphonie mobile (24),
(b) demande (60) d'informations d'utilisateur (62) d'un serveur local d'abonnés (20) par l'unité de commande d'appels et de sessions (16) du domaine IMS (14) comprenant une adresse (64) et/ou le nom du serveur d'applications (46) pour le réseau personnel (44),
(c) enregistrement du terminal de radiotéléphonie mobile (24) dans le domaine IMS (14) et transfert (70), par l'unité de commande d'appels et de sessions (16), de l'identité d'utilisateur privé et public (32, 38) contenue dans une demande d'enregistrement (68) au serveur d'applications (46) du réseau privé (44).

3. Procédé pour la mise à disposition et l'activation d'un réseau personnel (44) selon l'une quelconque des revendications 1 à 2, **caractérisé en ce que** l'étape d'activation du réseau personnel (44) comprend, en vue de l'activation, une vérification de l'autorisation du terminal de radiotéléphonie mobile (24) et/ou de l'utilisateur (22).

4. Procédé pour la mise à disposition et l'activation d'un réseau personnel (44) selon la revendication 3, **caractérisé en ce que** la vérification de l'autorisation comprend les étapes suivantes :
(a) transmission (72) au serveur local d'abonnés (20), par le serveur d'applications (46) du réseau personnel (44), de l'identité d'utilisateur privé reçue (32) du terminal de radiotéléphonie mobile (24),
(b) transmission (74) au serveur d'applications (46) du réseau personnel (44), sous forme de réponse par le serveur local d'abonnés (20), d'au moins une identité d'utilisateur public (38) correspondant à l'identité d'utilisateur privé (32),
(c) comparaison de l'identité d'utilisateur public (38) obtenue en vue de l'activation à l'identité d'utilisateur public (38) obtenue par le serveur local d'abonnés (20),
(d) activation du réseau personnel (44) pour les identités d'utilisateur privé et public (32, 38) d'un terminal de radiotéléphonie mobile (24) en cas de concordance des identités d'utilisateur public (38).
